# EUROPÄISCHE PATENTSCHRIFT

(11) **EP 0 621 239 B1**
(45) Veröffentlichungstag und Bekanntmachung des Hinweises auf die Patenterteilung: **27.05.1998**
(21) Anmeldenummer: 94103087.6
(22) Anmeldetag: 02.03.1994
(51) Int. Cl.: C02F 1/42, B01J 47/00, B01J 49/00

(54) **Klein-Wasseraufbereitungsanlage auf Ionenaustauscherbasis mit Möglichkeit zur Regeneration und thermischer Desinfektion**
Small water treatment unit based on ion exchangers with possibility of regeneration and thermal desinfection
Petite unité de traitement d'eau à base d'échangeurs d'ions avec possibilité de régénération et de dèsinfection thermique

(30) Priorität: 17.04.1993 DE 4312580; 21.12.1993 DE 4343615
(43) Veröffentlichungstag der Anmeldung: 26.10.1994
(73) Patentinhaber: Judo Wasseraufbereitung GmbH, D-71364 Winnenden (DE)
(72) Erfinder: Söcknick, Ralf, Dr., D-70806 Kornwestheim (DE); Braun, Martin, D-71573 Allmersbach i.T. (DE)
(74) Vertreter: KOHLER SCHMID + PARTNER

(56) Entgegenhaltungen:
- DE-C- 3 522 966
- NL-C- 68 653
- US-A- 3 204 770
- DATABASE WPI Week 8822, Derwent Publications Ltd., London, GB; AN 88-151463 & JP-A-63 092 351 (EBARA SOGO KENKYUSH)

## Beschreibung

Die Erfindung betrifft eine Klein-Wasseraufbereitungsanlage zur Herstellung von Trink- und Kochwasser mit mindestens einem harzgefüllten Ionenaustauscherbehälter, der ein Fassungsvermögen zwischen 100 ml und 1000 ml aufweist und mit dem jeweils ca. 10 l bis 100 l Produktwasser mit einer Füllung regenerierten Harzes hergestellt werden können, wobei der Ionenaustauscherbehälter oben und unten wasserdurchlässige Siebböden oder im oberen und/oder unteren Bereich seiner Seitenwände vorgesehene Perforationen sowie einen freien Wasser-Zu- und Ablauf aufweist, und wobei der Wasserzulauf zum Ionenaustauscherbehälter i.w. druckfrei und so gestaltet ist, daß eine Wasserströmung durch den Ionenaustauscherbehälter nur aufgrund der Schwerkraft zustande kommt.

Derartige Klein-Wasseraufbereitungsanlagen sind beispielsweise aus DE 88 10 413.3 U1, DE 91 13 512.5 U1, DE 39 36 611 A1, EP 0 155 645 B1, DE 34 09 828 C2 oder DE 91 05 220.3 U1 bekannt. In den drei erstgenannten Druckschriften werden wasserdurchlässige Siebböden im Ionenaustauscher verwendet, während in den drei letztgenannten Druckschriften im oberen und/oder unteren Bereich der Seitenwände des Ionenaustauscherbehälters vorgesehene Perforationen offenbart sind.

Weiter sind aus EP 0 324 634 A2 und aus DE 40 24 289 A1 Wasseraufbereitungsgeräte der eingangs beschriebenen Art bekannt, die insbesondere zur Verwendung in Verbindung mit einer Tee- oder Kaffeebrühmaschine geeignet sind. Schließlich ist in DE 40 35 563 A1 ein Wasseraufbereitungsgerät und ein Verfahren zum Aufbereiten von Wasser bekannt, bei dem die Wasserströmung durch den Ionenaustauscherbehälter nicht druckfrei, sondern mit Wasserleitungsdruck erzeugt wird, wobei die Behandlung des Ionenaustauschers mit einer Regenerierflüssigkeit erfolgt.

Zur Verbesserung des Trinkwassers, insbesondere zur Entfernung der Kalzium- und Magnesiumionen bzw. von Nitrationen werden im Haushaltsbereich sogenannte Wasserreinigungsgeräte verwendet. Diese enthalten als wirksame Komponente in der Regel Kleinstfilter mit Ionenaustauschermaterial zum Austausch der oben genannten, unerwünschten Ionen gegen z.B. H⁺ -, OH⁻ -, Na⁺ - oder C1⁻ - Ionen. Das Ionenaustauschermaterial befindet sich üblicherweise in Vorrichtungen, die einen Zulauf für das zu behandelnde Wasser sowie am entgegengesetzten Ende der Vorrichtung einen Ablauf für das behandelte Wasser haben. Da das Wasser derartige Wasserreinigungsgeräte in der Regel durch die Schwerkraft getrieben durchströmt, befindet sich der Zulauf zumeist am oberen Vorrichtungsende und der Ablauf am unteren Vorrichtungsende.

Zu- und Ablauf sind in der Regel als Siebböden o.ä. ausgeführt, die das Zonenaustauschermaterial in der Vorrichtung halten, jedoch für Wasser durchlässig sind.

Die in der Vorrichtung enthaltene Menge an Ionenaustauschermaterial reicht je nach Rohwasserqualität bzw. Produktwasseranforderung für die Herstellung von ca. 10 - 100 l Produktwasser. Danach muß die Vorrichtung mit dem erschöpften Ionenaustauschermaterial weggeworfen bzw. zum Hersteller zwecks Recycling des Ionenaustauschermaterials zurückgeschickt werden.

Zum Betrieb, d.h. zur Herstellung von derartig behandeltem Wasser wird die Vorrichtung in ein Vorratsgefäß für das zu behandelnde Wasser gesteckt bzw. stellt dessen Boden dar, so daß dieses zu behandelnde Wasser schwerkraftgetrieben durch die Vorrichtung fließt und das behandelte Wasser in ein dafür bereitgestelltes Auffanggefäß tropft (siehe z.B. DE 34 09 828 C2, EP 0 155 645 B1, DE 88 10 413 U1, DE 39 36 611 A1, DE 91 05 220 U1). Diese Gesamtanordnung stellt das oben genannte Wasserreinigungsgerät dar.

Derartige Wasserreinigungsgeräte haben drei wesentliche Nachteile. Zum einen darf das zu behandelnde Wasser wegen der aus hygienischen Gründen verwendeten geringen Menge an Ionenaustauschermaterial nur sehr langsam durch die Vorrichtung fließen, damit das Wasser in der Vorrichtung eine genügend große Verweilzeit hat und ausreichend gut behandelt wird. So ergibt sich eine Herstellungsgeschwindigkeit für das behandelte Wasser von nur wenigen Litern je Stunde. Zum zweiten fällt die erschöpfte Vorrichtung als Müll an bzw. muß aufwendig über den Einzelhandel wieder eingesammelt und an den Hersteller zur Regeneration zurückgeschickt werden. Der dritte Nachteil liegt in der oben bereits erwähnten Hygiene. Aus Komfortgründen sollte die Filtervorrichtung eine gewisse Standzeit haben, damit sie mehrere Tage lang z.B. das Trink- und Kochwasser im Haushalt behandeln kann und nicht ständig erneuert werden muß. Entsprechend der DIN 19636 müssen Ionenaustauscheranlagen für den Hauswasserbereich jedoch aus hygienischen Gründen alle 4 Tage zwangsregeneriert und dabei z.B. mit elektrolytisch aus dem Regeneriermittel NaCl hergestelltem Chlor desinfiziert werden.

Herkömmliche Wasserreinigungsgeräte der oben beschriebenen Art mit Vorrichtungen zum Ionenaustausch stehen jedoch häufig mehrere Wochen in der beheizten Küche, bis sie z.B. in einem kleineren Haushalt erschöpft sind (Beispiel: Eine Vorrichtung mit 100 l Kapazität reicht bei einem Zweipersonenhaushalt mit einem Tagesbedarf von 5 l Wasser für Koch- und Trinkzwecke ca. 20 Tage).

Aufgabe der vorliegenden Erfindung ist es daher, eine Klein-Wasseraufbereitungsanlage der oben dargestellten Art sowie ein Verfahren zu ihrem Betrieb vorzustellen, die die oben geschilderten Nachteile des Standes der Technik überwindet, insbesondere einen schnelleren Durchlauf des zu behandelnden Wassers erlaubt und ohne großen Aufwand regenerierbar und desinfizierbar ist.

Erfindungsgemäß wird diese Aufgabe dadurch gelöst, daß eine Regenerierstation mit einer Zulaufleitung für Regeneriermittelflüssigkeit zum Oberteil des Ionenaustauscherbehälters und eine Ablaufleitung für verbrauchtes Regeneriermittel aus dem Bodenteil des Ionenaustauscherbehälters sowie mit einer Heißwasserzuführung zum Ionenaustauscherbehälter für heißes Wasser zwischen 50°C und 110°C, insbesondere zwischen 80°C und 110°C vorgesehen ist, und daß die Regenerierstation eine Einrichtung zum Erhitzen der Regenerierstation auf 50° bis 110°C enthalt.

Dadurch kann gleichzeitig mit der Regeneration auch die thermische Desinfektion des Ionenaustauschermaterials und des entsprechenden Behälters durchgeführt werden.

Durch die Regeneriermöglichkeit kann eine größere Menge an Ionenaustauschermaterial verwendet werden, so daß auch ein schnellerer Durchlauf des zu behandelnden Wassers möglich ist. Aufgrund der Heißwasserzuführung besteht jederzeit die Möglichkeit einer thermischen Desinfektion des Ionenaustauschermaterials durch Erhitzen desselben zur Verhinderung von Keimwachstum.

Eine thermische Desinfektion insbesondere mit heißem Wasser ist per se zwar schon lange bekannt, insbesondere auch im Zusammenhang mit der Desinfektion von Ionenaustauscherharz aus einer Diplomarbeit von Frau L.C. Rude am Engler-Bunte-Institut, Abt. Wasserchemie an der Universität Karlsruhe (1987). In dieser Arbeit wird lediglich das Erhitzen einer Harzbettsäule während der Regeneration von professionellen Parallel-Wasserenthärtungsanlagen untersucht, jedoch handelte es sich dabei um einen von den oben beschriebenen Klein-Wasseraufbereitungsanlagen völlig unterschiedlichen Anlagentyp mit Druckwasserbetrieb und Nenn-Durchflußleistungen von mehr als 2 m³/h. Derartige Wasserenthärtungsanlagen sind schon wegen ihrer Größe, wegen ihres Preises, ihres technischen Aufwands und insbesondere der Druckwassereinleitung mit den oben beschriebenen Klein-Wasseraufbereitungsanlagen nicht vergleichbar.

Bei einer bevorzugten Ausführungsform der erfindungsgemäßen Klein-Wasseraufbereitungsanlage ist die Heißwasserzuführung mit der Zulaufleitung für Regeneriermittelflüssigkeit identisch. Dadurch kann die Anlage insgesamt kompakter gestaltet werden.

Vorzugsweise weist die Regenerierstation eine Steuerungsvorrichtung zum automatischen Zuführen von Regeneriermittelflüssigkeit und Heißwasser in den Ionenaustauscherbehälter auf, so daß der Regenerationsvorgang voll- oder zumindest halbautomatisch durchgeführt werden kann.

Bei einer weiteren bevorzugten Ausführungsform sind mehrere übereinander stapelbare Ionenaustauscherbehälter vorgesehen, so daß die Wasseraufbereitungsanlage auch bei Austausch unterschiedlicher Ionensorten (Anionen und Kationen) relativ kompakt gehalten werden kann.

Um Verunreinigungen aus den Behältern fernzuhalten, kann der oberste Ionenaustauscherbehälter einen perforierten Deckel aufweisen, durch welchen das zu behandelnde Wasser oder aber Regeneriermittelflüssigkeit in den Ionenaustauscherbehälter eingeleitet werden kann.

Der Ionenaustauscherbehälter der erfindungsgemäßen Anlage kann mit Anionenaustauscherharz oder mit Kationenaustauscherharz befüllt sein. Falls sowohl Anionenaustauscherharz als auch Kationenaustauscherharz vorhanden ist, sollten diese Harze in zwei separaten Behältereinheiten untergebracht sein.

Zusätzlich zum Ionenaustauscherharz kann bei einer besonders bevorzugten Ausführungsform noch Aktivkohle in den Ionenaustauscherbehälter eingefüllt sein, mit der organische Verunreinigungen aus dem zu behandelnden Wasser entfernt werden. Da Aktivkohle nicht oder nur sehr schwierig regeneriert werden kann, ist es am einfachsten, wenn nach jeder Regeneration des Ionenaustauscherharzes die Aktivkohle verworfen und durch frische in der benötigten Menge ersetzt wird.

Vorteilhafterweise kann mindestens ein Ionenaustauscherbehälter hinsichtlich seiner Ober- und Unterseite symmetrisch aufgebaut sein und daher sowohl im Gleichstrom als auch im Gegenstrom regeneriert werden kann. Insbesondere bei der Gegenstromregeneration wird dann der Ionenaustauscherbehälter einfach um 180° gegenüber seiner Betriebslage um eine horizontale Achse gedreht in die Regenerierstation eingesetzt.

Anstelle einer Ablaufleitung kann bei einer Ausführungsform in der Regenerierstation ein unterhalb des untersten zu regenerierenden Ionenaustauscherbehälters angeordnetes Sammelgefäß für verbrauchtes Regeneriermittel vorgesehen sein. Diese Ausführungsform ist vor allem für den halbautomatischen Betrieb vorgesehen, bei dem frisches Regeneriermittel von Hand eingefüllt und verbrauchtes Regeneriermittel von Hand entfernt wird.

Bei einer anderen Ausführungsform kann über dem obersten Ionenaustauscherbehälter in der Wasseraufbereitungsanlage ein Einlaufgefäß angeordnet sein, welches vorzugsweise zum Schutz gegen Verschmutzung mit einem Deckel abdeckbar ist. In dieses Einlaufgefäß kann einerseits frische Regeneriermittelflüssigkeit, andererseits aber auch zu behandelndes Wasser eingegossen werden. Besonders vorteilhaft ist eine Kombination dieser Ausführungsform mit der zuvor genannten.

Bei einer besonders bevorzugten Ausführungsform enthält die Regenerierstation eine handelsübliche Haushaltskaffeemaschine, deren Kaffeefilterhalter durch einen zu regenerierenden Ionenaustauscherbehälter ersetzt ist. Dadurch wird die Anschaffung einer gesonderten Regenerierstation mit Möglichkeit zur Heißwasserbereitung oder zum Erhitzen der Regeneriermittelflüssigkeit eingespart. Außerdem entfällt durch die alternative Verwendung einer bereits vorhandenen Kaffeemaschine als Regenerierstation der Platzbedarf für ein weiteres Gerät. Hinzu kommt, daß der Benutzer oder die Benutzerin mit der Bedienung der Haushaltskaffeemaschine bereits vertraut ist und nicht die sachgerechte Handhabung eines weiteren Gerätes erlernen muß.

Die erfindungsgemäße Anlage kann so ausgestaltet sein, daß mindestens ein Ionenaustauscherbehälter eine zumindest annähernd zylindrische Behälterwand sowie zwei vertikal beabstandete Siebböden aufweist, zwischen denen Ionenaustauscherharz angeordnet ist, daß der Ionenaustauscherbehälter an seiner Oberseite einen Verteilerboden aufweist, und daß zu behandelndes Wasser durch den oberen Siebboden in das Ionenaustauscherharz strömen und dieses durch den unteren Siebboden wieder verlassen kann, wobei es auf einen Behälterboden trifft, radial nach innen und dort in einem äußeren Innenrohr nach oben bis zu einer von einem inneren Innenrohr gebildeten Überlaufkante strömt, welche oberhalb des unteren Siebbodens und unterhalb des oberen Siebbodens, vorzugsweise oberhalb des untersten Drittels der axialen Erstreckung des Ionenaustauscherharzes angeordnet ist, von wo das Wasser durch das innere Innenrohr nach unten fließen und den Ionenaustauscherbehälter durch eine Bodenöffnung in behandeltem Zustand verlassen kann.

Durch diese Anordnung wird sichergestellt, daß immer eine bestimmte Menge an Flüssigkeit im Ionenaustauscherbehälter verbleibt. Ein Austrocknen des Ionenaustauscherharzes kann auf diese Weise vermieden werden.

Die äußere Form der als Kleinstfilter verwendeten Harzbehälter ist in der Regel zumindest annähernd zylinderförmig und speziell an das Wasserreinigungsgerät angepaßt. Für die Verwendung dieser Harzbehälter ist also die Anschaffung einer speziellen Vorrichtung - des Wasserreinigungsgerätes - erforderlich. Dies wird bei einer besonders bevorzugten Ausführungsform der erfindungsgemäßen Anlage auf überraschend einfache Weise dadurch vermieden, daß die äußere Form des Harzbehälters der inneren Form eines Standard-Kaffeefiltertütenhalters entspricht, und daß der mit Ionenaustauscherharz befüllte Behälter anstelle einer Kaffeefiltertüte in den Standard-Kaffeefiltertütenhalter einer Kaffeemaschine oder in einen Standard-Kaffeefiltertütenhalter für die Kaffeefilterung von Hand eingesetzt werden kann. Hierdurch kann die normale Kaffeekanne als Sammelgefäß für das behandelte Trink- oder Kaffeewasser sowie für das verbrauchte Regeneriermittel verwendet werden.

Einen besonderen Vorteil im Zusammenhang mit der oben erwähnten Ausführungsform, bei der die Regenerierstation eine handelsübliche Haushaltskaffeemaschine enthält, stellt die Tatsache dar, daß aufgrund der äußeren Form des Ionenaustauscherbehälters dieser in jeder marktgängigen Kaffeemaschine eingesetzt werden kann, da die Ionenaustauscherform den standardisierten Kaffeefiltertütenhaltern entspricht. Für die verschiedenen Größen der Standard-Kaffeefiltertütenhalter sind natürlich in der Regel verschieden große Ionenaustauscherbehältertypen erforderlich. Kleinere Ionenaustauschertypen können jedoch auch in größeren Kaffeefiltertütenhaltergrößen eingesetzt werden.

Bei einer besonders bevorzugten Ausführungsform ist vorgesehen, daß der Harzbehälter oben verschlossen ist und das zu behandelnde Wasser bzw. die Regeneriermittellösung lediglich über ein Tauchrohr in den Harzbehälter hineingelangen kann und dort oberhalb des ebenfalls verschlossenen Behälterbodens wieder nach oben umgeleitet wird. Zunächst strömt die Flüssigkeit dann durch den das Ionenaustauscherharzbett tragenden Siebboden, das Ionenaustauscherharzbett sowie den oberen Siebboden hindurch. Zwischen dem oberen Siebboden und der Ionenaustauscherbehälteroberwand sammelt sich das behandelte Wasser bzw. das verbrauchte Regeneriermittel und verläßt den Ionenaustauscherbehälter über die in diesem Bereich perforierte Außenwand. Zwischen der Ionenaustauscherbehälterwand und dem Kaffeefiltertütenhalter fließt die Flüssigkeit schwerkraftbedingt nach unten zum Auslauf des Kaffeefiltertütenhalters.

In den Rahmen der Erfindung fällt auch ein Verfahren zum Betrieb einer Klein-Wasseraufbereitungsanlage der oben geschilderten Art, bei dem beim Regenerieren des Ionenaustauscherharzes bei mindestens einem Regenerationsschritt heiße Flüssigkeit mit einer Temperatur zwischen 50°C und 110°C, vorzugsweise zwischen 80°C und 100°C durch das Ionenaustauscherharz geleitet wird, um eine thermische Desinfektion des Ionenaustauschermaterials zu erreichen.

Bei einer Variante des erfindungsgemäßen Verfahrens wird heiße Regeneriermittellösung durch das Ionenaustauscherharz geleitet. Bei einer weiteren Variante wird in einem Spülschritt heißes Wasser zum Auswaschen von Regeneriermittelresten durch das Ionenaustauscherharz geleitet. Besonders bevorzugt ist eine Kombination dieser beiden Verfahrensvarianten, so daß nach einer Erwärmung des Ionenaustauschermaterials beim Einleiten der heißen Regeneriermittellösung im ersten Verfahrensschritt die Temperatur des Harzes durch das Einleiten von heißem Spülwasser im zweiten Verfahrensschritt noch weiter erhöht wird, wodurch das Ionenaustauschermaterial über einen längeren Zeitraum auf einem keimtötenden Temperaturniveau gehalten wird.

Bei einer einfachen Verfahrensvariante wird die heiße Regeneriermittellösung bzw. das heiße Nachspülwasser außerhalb der Regenerierstation, beispielsweise auf einem Herd, in einem Teewasserkessel bereitet und anschließend von oben in den oder die Ionenaustauscherbehälter gegossen.

Bei einer bevorzugten Verfahrensvariante unter Verwendung einer Haushaltskaffeemaschine ist vorgesehen, daß Regeneriermittel abgemessen und in eine Kaffeekanne gegeben wird, die Kaffeekanne daran anschließend bis zu einer vorgegebenen Markierung mit Leitungswasser gefüllt wird, wobei sich das Regeneriermittel unter Bildung einer Regeneriermittellösung zumindest weitgehend auflöst und diese Regeneriermittellösung in einen Vorratsbehälter der Kaffeemaschine eingefüllt wird und nach Betätigen eines Schalters der Kaffeemaschine erhitzt und in den oberen Zulauf des zu regenerierenden Ionenaustauuscherbehälters transportiert wird, das verbrauchte Regeneriermittel den Ionenaustauscherbehälter an seinem unteren Ende wieder verläßt und in der Kaffeekanne aufgefangen wird, welche nach beendetem Durchlauf der Regeneriermittellösung durch das Ionenaustauschermaterial entleert, ausgespült und mit Leitungswasser befüllt wird, welches wiederum in den Vorratsbehälter der Kaffeemaschine eingefüllt wird und in einem zweiten Durchlauf als heißes Nachwaschwasser den Ionenaustauscherbehälter von Regeneriermittelresten befreit und weiter aufheizt bzw. die durch die Regeneration erreichte hohe Temperatur im Ionenaustauschermaterial über einen längeren Zeitraum aufrecht erhält.

In einer weiteren bevorzugten Verfahrensvariante wird das Regeneriermittel abgemessen und als Feststoff im Zulaufbereich des Ionenaustauscherbehälters deponiert, wo es mit Beginn der Regeneration vom zuströmenden Wasser aufgelöst und als verdünnte Regeneriermittellösung durch das Harzbett geleitet wird. Der Vorteil dieser Variante besteht darin, daß die Regenerierstation mit Ausnahme des Sammelgefäßes nicht mit dem Regeneriermittel in Kontakt kommt.

Alternativ dazu kann die Regeneration des Ionenaustauscherharzes in der Regenerierstation automatisch erfolgen.

Insbesondere beim Betrieb von Anlagen, die sowohl Anionen als auch Kationen austauschen, werden Ionenaustauscherbehälter, die unterschiedliche Arten von Ionenaustauscherharz enthalten, beispielsweise entweder Kationenaustauscherharz oder Anionenaustauscherharz, getrennt und unabhängig voneinander regeneriert.

Die Regeneration des Ionenaustauscherharzes kann besonders einfach im Gleichstrom erfolgen. Alternativ kann die Regeneration des Ionenaustauscherharzes aber auch im Gegenstrom erfolgen, wenn der oben beschriebene, symmetrisch aufgebaute Ionenaustauscherbehältertyp verwendet wird.

Insbesondere bei der Verwendung der erfindungsgemäßen Wasseraufbereitungsanlage zur Herstellung von Trink- und Kochwasser empfielt sich die Verwendung von Zitronensäure zur Regeneration von Kationenaustauscherharz, da diese im Gegensatz zu Salzsäure oder Schwefelsäure ungiftig ist.

Besonders empfehlenswert ist die Verwendung von NaCl, vorzugsweise Speisesalz, zur Regeneration von Kationenaustauscherharz und/oder Anionenaustauscherharz, da Kochsalz in jedem Haushalt vorhanden und chemisch völlig ungefährlich ist.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebigen Kombinationen Anwendung finden. Es zeigen:
- Fig. 1: eine schematische Seitenansicht der erfindungsgemäßen Anlage mit Regenerierstation;
- Fig. 2: eine schematische Seitenansicht einer erfindungsgemäßen Anlage mit mehreren aufeinander gestapelten Ionenaustauschergefäßen; und
- Fig. 3: einen Vertikalschnitt durch eine besondere Ausführungsform eines erfindungsgemäßen Ionenaustauscherbehälters.
- Fig. 4: das Ausführungsbeispiel 5 eines erfindungsgemäßen Ionenaustauscherbehälters eingesetzt in einen Standard-Kaffeefiltertütenhalter;
- Fig. 5: das Ausführungsbeispiel 6 eines erfindungsgemäßen Ionenaustauscherbehälters eingesetzt in einen Standard-Kaffeefiltertütenhalter;
- Fig. 6: eine schematische Seitenansicht einer Haushaltskaffeemaschine als Regenerierstation mit dem erfindungsgemäßen Ionenaustauscherbehälter eingesetzt in den Kaffeefiltertütenhalter der Kaffeemaschine.

### Beispiel 1:

Ein besonders bevorzugtes Ausführungsbeispiel basiert auf einer Standard-Kaffeemaschine als Regenerierstation 1, deren Kaffeefilterhalter durch einen z.B. zylindrischen, mit Ionenaustauschermaterial befüllten Ionenaustauscherbehälter 4 ersetzt wurde. Das Regeneriermittel (z.B. NaCl, besonders bevorzugt Speisesalz) wird abgemessen (z.B. eine bestimmte Anzahl an Teelöffeln, besonders bevorzugt mit Hilfe eines Meßbechers) und in eine Kaffeekanne 2 gegeben. Dann wird die Kaffeekanne bis zu einer vorgegebenen Markierung mit Leitungswasser gefüllt, wobei sich das Speisesalz weitgehend auflöst. Die hierbei entstehende Lösung (incl. eventuell nicht gelöster Salzreste) wird in einen Vorratsbehälter 3 der Kaffeemaschine gefüllt.

Die Kaffeemaschine wird mit einem Schalter 5 eingeschaltet und die von der Kaffeemaschine erhitzte und transportierte Regenerierlösung fließt durch die Ionenaustauschervorrichtung. Das Ionenaustauschermaterial wird regeneriert und die verbrauchte Regeneriermittellösung sammelt sich in der Kaffeekanne 2, die sich in ihrer vorgesehenen Position befindet. Nachdem das gesamte Regeneriermittel durch den Ionenaustauscherbehälter 4 hindurchgeflossen ist, wird das sich in der Kaffeekanne gesammelte Regenerat verworfen, die Kanne mit Leitungswasser ausgespült und bis zur Maximalmarkierung gefüllt. Dieses Wasser wird wiederum in den Vorratsbehälter 3 der Maschine eingefüllt und zum Nachwaschen, d.h. zum Auswaschen von Salzresten aus dem Ionenaustauschermaterial sowie zur weiteren Aufheizung desselben benutzt. Die Auslauftemperatur des Nachwaschwassers aus dem Ionenaustauscherbehälter 4 beträgt ca 70°C. Hierdurch ist sichergestellt, daß sogar der Prüfkeim Pseudomonas aeruginosa entsprechend der DIN 19636 abgetötet wird. Der Ionenaustauscherbehälter 4 kann sowohl mit Anionenaustauschermaterial als auch mit Kationenaustauschermaterial befüllt sein.

### Beispiel 2:

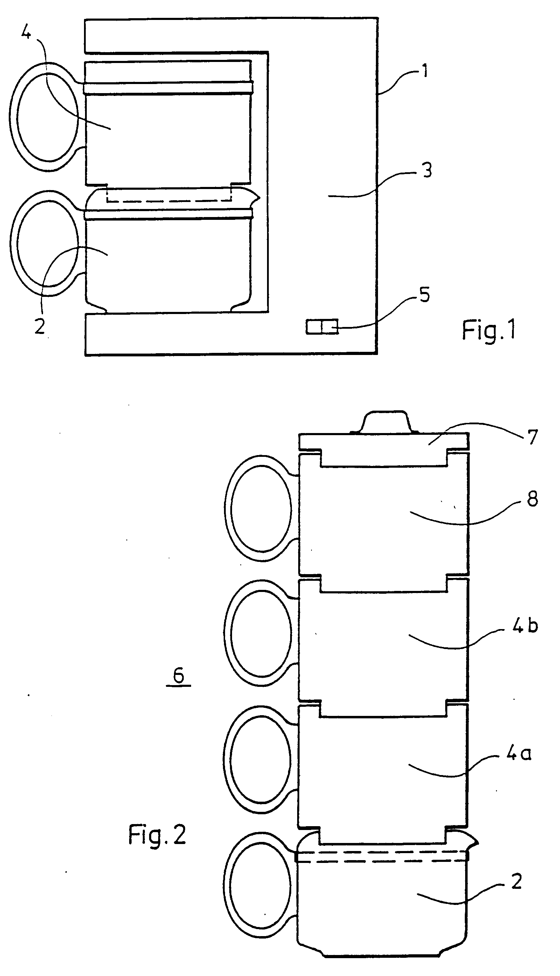

Fig. 2 zeigt eine besonders bevorzugte Ausführungsform für die Trinkwasserbehandlung mit einem Wasserreinigungsgerät 6, dessen Ionenaustauscherbehälter 4a und 4b mit der als Regenerierstation verwendeten Kaffeemaschine 1 entsprechend Beispiel 1 regeneriert wurden.

Ein Deckel 7 schützt das in einem Vorratsgefäß 8 befindliche Rohwasser vor Staub oder anderen Verunreinigungen. Dieses Wasser durchströmt nacheinander den mit Kationenaustauschermaterial befüllten Ionenaustauscherbehälter 4b und den mit Anionenaustauschermaterial befüllten Ionenaustauscherbehälter 4a, wobei die Reihenfolge beliebig ist, und sammelt sich dann in der Kaffeekanne 2. Das so behandelte Wasser kann nun für Trink- und Kochzwecke verwendet werden. Je nach Rohwasserqualität ist nur der Einsatz des Kationenaustauscherbehälters 4b (Kalzium- und Magnesiumaustausch) oder der Einsatz des Anionenaustauscherbehälters 4a (Nitrataustausch) erforderlich. Bei Bedarf können jedoch beide Vorrichtungen miteinander kombiniert werden.

### Beispiel 3:

Bei einer besonders bevorzugten Ausführungsform wird entsprechend Beispiel 1 mit ca. 22g NaCl (3 schwach gehäufte Teelöffel) eine Ionenaustauschervorrichtung mit ca. 0,5 Liter Ionenaustauschermaterial (Kationenaustauscher) regeneriert. Mit dem so regenerierten Ionenaustauscherbehälter (4b) können aus ca. 35 l Wasser jeweils ca. 20° dH entfernt werden. Die Produktwassermenge ist so dimensioniert, daß die Vorrichtung 1 bis 2 mal pro Woche regeneriert werden muß, in Anlehnung an die in der DIN 19636 geforderten Zwangsregeneration alle 4 Tage.

### Beispiel 4:

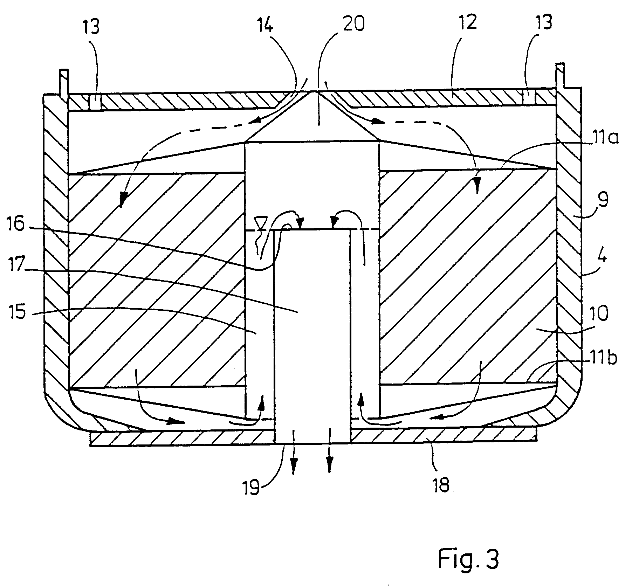

Die Fig. 3 zeigt eine besonders bevorzugte Ausführung des Ionenaustauscherbehälters 4 mit einer zylindrischen Behälterwand 9 und Ionenaustauschermaterial 10, welches von zwei Siebböden 11a und 11b gehalten wird. Der Zulauf des zu behandelnden Wassers erfolgt von oben über einen Verteilerboden 12 mit Öffnungen 13 und 14 und einen Verteilerkegel 20. Das Wasser strömt durch den oberen Siebboden 11a in das Ionenaustauschermaterial 10 und verläßt dieses über den unteren Siebboden 11b. Dann wird es in einem äußeren Innenrohr 15 nach oben geleitet bis zu einer Oberkante 16 eines inneren Innenrohres 17, welche eine Überlaufkante bildet. Im inneren Innenrohr 17 fließt das behandelte Wasser senkrecht nach unten und verläßt den mit einem Behälterboden 18 verschlossenen Ionenaustauscherbehälter 4 durch eine Öffnung 19. Der besondere Vorteil dieser Ausführungsform besteht darin, daß die Hohlräume des Ionenaustauschermaterials immer zumindest in einem Teilbereich mit Wasser gefüllt sind, daß die Regeneriermittelverteilung über dem Behälterquerschnitt gleichmäßig erfolgt und daß das gesamte Harzvolumen durch die gleichmäßige Strömungsverteilung beim Regenerieren und Nachwaschen auf die Solltemperatur aufgeheizt wird.

### Beispiel 5:

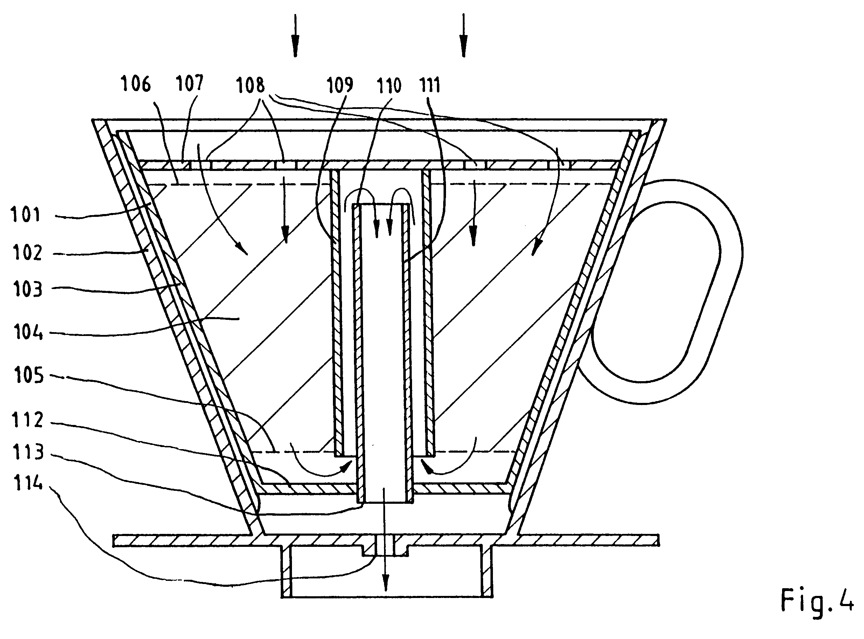

Fig. 4 zeigt eine bevorzugte Ausführung eines Ionenaustauscherbehälters 101 mit einer einem Standard-Kaffeefiltertütenhalter 102 angepaßten Behälteraußenwand 103 und Ionenaustauschermaterial 104, welches von zwei Siebböden 105 und 106 gehalten wird. Der Zulauf des zu behandelnden Wassers erfolgt von oben über einen Verteilerboden 107 mit Öffnungen 108. Das Wasser strömt durch den oberen Siebboden 106 in das Ionenaustauschermaterial 104 und verläßt dieses über den unteren Siebboden 105. Dann wird es in einem äußeren Innenrohr 109 nach oben geleitet bis zu einer Oberkante 110 eines inneren Innenrohres 111, welche eine Überlaufkante bildet. Im inneren Innenrohr 111 fließt das behandelte Wasser senkrecht nach unten und verläßt den mit einem Behälterboden 112 verschlossenen Ionenaustauscherbehälter 101 durch eine Öffnung 113. Es gelangt so in den Kaffeefiltertütenhalter 102 und verläßt diesen über einen Ablauf 114.

Der besondere Vorteil dieser Ausführungsform besteht darin, daß die Hohlräume des Ionenaustauschermaterials immer zumindest in einem Teilbereich mit Wasser gefüllt sind, daß die Regeneriermittelverteilung über dem Behälterquerschnitt gleichmäßig erfolgt, und daß das gesamte Harzvolumen durch die gleichmäßige Strömungsverteilung beim Regenerieren und Nachwaschen auf die Solltemperatur aufgeheizt wird.

### Beispiel 6:

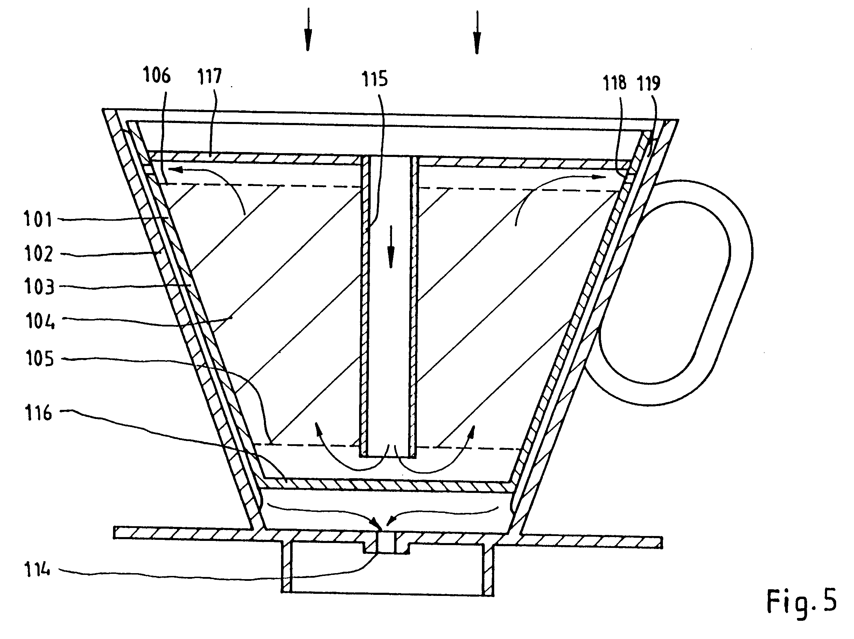

Fig. 5 zeigt eine besonders bevorzugte Ausführungsform des Ionenaustauscherbehälters 101 mit einer dem Kaffeefiltertütenhalter 102 angepaßten Behälteraußenwand 103 und Ionenaustauschermaterial 104, welches von zwei Siebböden 105 und 106 gehalten wird. Der Harzbehälter 101 ist von oben verschlossen und das zu behandelnde Wasser bzw. die Regeneriermittellösung strömt über ein Tauchrohr 115 in den Harzbehälter hinein und wird oberhalb eines ebenfalls verschlossenen Behälterbodens 116 wieder nach oben umgeleitet. Zunächst strömt die Flüssigkeit dann durch den das Ionenaustauscherharzbett tragenden Siebboden 105, das Ionenaustauscherharzbett 104 sowie den oberen Siebboden 106 hindurch. Zwischen dem oberen Siebboden und einer Ionenaustauscherbehälteroberwand 117 sammelt sich das behandelte Wasser bzw. das verbrauchte Regeneriermittel und verläßt den Ionenaustauscherbehälter über die in diesem Bereich mit Öffnungen 118 versehene Außenwand 103. Zwischen der Ionenaustauscherbehälterwand und dem Kaffeefiltertütenhalter fließt die Flüssigkeit schwerkraftbedingt nach unten zum Auslauf 114 des Kaffeefiltertütenhalters 102. Stege 119 führen zu einem Ringspalt zwischen Filtertütenhalterinnenwand und Harzbehälteraußenwand.

### Beispiel 7:

Eine besonders vorteilhafte Ausführungsform ergibt sich, wenn die Öffnungen 118 in der Außenwand 103 des in Fig. 5 dargestellten Ionenaustauscherbehälters 101 so ausgeführt werden, daß der Siebboden 106 entfallen kann, da die Öffnungen 118 durch feine Spalte, Schlitze, Siebe oder sonstige Perforationen gebildet werden, welche die Funktion des Siebbodens 106 wahrnehmen, d. h. also Flüssigkeiten gut hindurchlassen, das Ionenaustauscherharz jedoch zuverlässig im Behälter 101 zurückhalten.

### Beispiel 8:

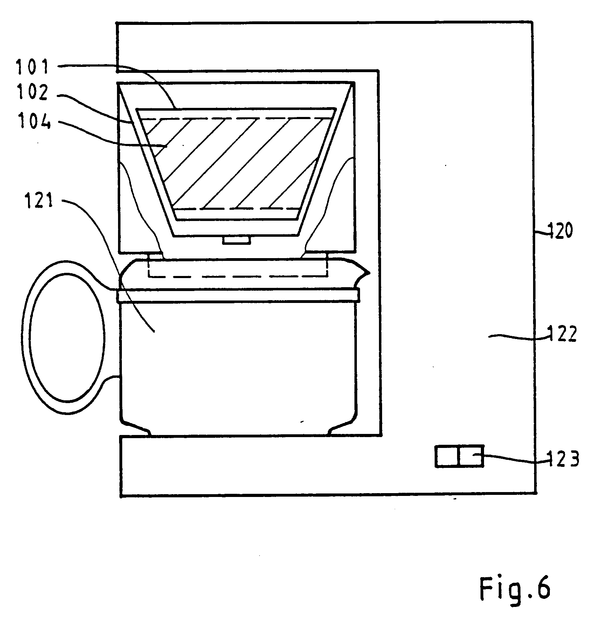

Ein bevorzugtes Ausführungsbeispiel basiert auf einer Standard-Kaffeemaschine (Fig. 6) als Regenerierstation 120, in deren Kaffeefiltertütenhalter 102 der an dessen Innenform angepaßte, mit Ionenaustauschermaterial befüllte Ionenaustauscherbehälter 101 eingesetzt wurde. Das Regeneriermittel (z. B. NaCl, besonders bevorzugt Speisesalz) wird abgemessen (z. B. eine bestimmte Anzahl an Teelöffeln, besonders bevorzugt mit Hilfe eines Meßbechers) und in eine Kaffeekanne 121 gegeben. Dann wird die Kaffeekanne bis zu einer vorgegebenen Markierung mit Leitungswasser gefüllt, wobei sich das Speisesalz weitgehend auflöst. Die hierbei entstehende Lösung (inkl. eventuell nicht gelöster Salzreste) wird in einen Vorratsbehälter 122 der Kaffeemaschine gefüllt.

Die Kaffeemaschine wird mit einem Schalter 123 eingeschaltet und die von der Kaffeemaschine erhitzte und transportierte Regenerierlösung fließt durch die Ionenaustauschervorrichtung. Das Ionenaustauschermaterial wird regeneriert und die verbrauchte Regeneriermittellösung sammelt sich in der Kaffeekanne 121, die sich in ihrer vorgesehenen Position befindet.

Nachdem das gesamte Regeneriermittel durch den Ionenaustauscherbehälter 101 hindurchgeflossen ist, wird das sich in der Kaffeekanne gesammelte Regenerat verworfen, die Kanne mit Leitungswasser ausgespült und bis zur Maximalmarkierung gefüllt. Dieses Wasser wird wiederum in den Vorratsbehälter 122 der Maschine gefüllt und zum Nachwaschen, d. h. zum Auswaschen von Salzresten aus dem Ionenaustauschermaterial sowie zur weiteren Aufheizung desselben benutzt.

Die Auslauftemperatur des Nachwaschwassers aus dem Ionenaustauscherbehälter 101 beträgt ca. 70 °C. Hierdurch ist sichergestellt, daß sogar der Prüfkeim Pseudomonas aeruginosa entsprechend DIN 19636 abgetötet wird. Der Ionenaustauscherbehälter 101 kann sowohl mit Anionenaustauschermaterial als auch mit Kationenaustauschermaterial befüllt sein.

### Beispiel 9:

Bei einer besonders bevorzugten Ausführungsform wird entsprechend Beispiel 8 mit ca. 22 g NaCl (3 schwach gehäufte Teelöffel) eine Ionenaustauschervorrichtung mit ca. 0,5 Liter Ionenaustauschermaterial (Kationenaustauscher) regeneriert (Vorrichtung passend zu Kaffeefiltertütenhalter Größe 4). Mit dem so regenerierten Ionenaustauscherbehälter 101 können aus ca. 35 Liter Wasser jeweils ca. 20 °dH entfernt werden. Die Produktwassermenge ist so dimensioniert, daß die Vorrichtung ein- bis zweimal pro Woche regeneriert werden muß, in Anlehnung an die in der DIN 19636 geforderte Zwangsregeneration alle 4 Tage.

### Beispiel 10:

Vorteilhaft wird als Ionenaustauscherharz ein stark saures Kationenaustauscherharz verwendet, das mit Kochsalz regeneriert wird und zur Enthärtung eingesetzt wird.

### Beispiel 11:

Besonders vorteilhaft wird als Ionenaustauscherharz ein schwach saures Kationenaustauscherharz eingesetzt, das bevorzugt mit Zitronensäure regeneriert wird und zur Enthärtung eingesetzt wird, wobei hierbei kein Natrium in das Produktwasser abgegeben wird.

### Beispiel 12:

Ebenfalls vorteilhaft wird als Ionenaustauscherharz ein stark basisches Anionenaustauscherharz eingesetzt, welches mit Kochsalz regeneriert wird und zur Verringerung der Nitratkonzentration verwendet wird. Besonders vorteilhaft wird hierfür ein nitratspezifisches Ionenaustauscherharz verwendet.

### Beispiel 13:

Besonders vorteilhaft wird das Ionenaustauscherharz durch einen Anteil an Aktivkohle zur Entfernung organischer Verunreinigungen ergänzt, die ebenfalls thermisch desinfiziert und hierbei gleichzeitig thermisch regeneriert wird.

## Patentansprüche

1. Klein-Wasseraufbereitungsanlage zur Herstellung von Trink- und Kochwasser mit mindestens einem harzgefüllten Ionenaustauscherbehälter, der ein Fassungsvermögen zwischen 100 ml und 1000 ml aufweist und mit dem jeweils ca. 10 l bis 100 l Produktwasser mit einer Füllung regenerierten Harzes hergestellt werden können, wobei der Ionenaustauscherbehälter oben und unten wasserdurchlässige Siebböden oder im oberen und/oder unteren Bereich seiner Seitenwände vorgesehene Perforationen sowie einen freien Wasser-Zu- und Ablauf aufweist, und wobei der Wasserzulauf zum Ionenaustauscherbehälter i.w. druckfrei und so gestaltet ist, daß eine Wasserströmung durch den Ionenaustauscherbehälter nur aufgrund der Schwerkraft zustande kommt,
dadurch gekennzeichnet,
daß eine Regenerierstation (1; 120) mit einer Zulaufleitung für Regeneriermittelflüssigkeit zum Oberteil des Ionenaustauscherbehälters (4, 4a, 4b; 101) und eine Ablaufleitung für verbrauchtes Regeneriermittel aus dem Bodenteil des Ionenaustauscherbehälters (4, 4a, 4b; 101) sowie mit einer Heißwasserzuführung zum Ionenaustauscherbehälter (4, 4a, 4b; 101) für heißes Wasser zwischen 50°C und 110°C, insbesondere zwischen 80°C und 110°C vorgesehen ist, und daß die Regenerierstation (1; 120) eine Einrichtung zum Erhitzen der Regeneriermittelflüssigkeit auf 50°C bis 110°C enthält.

2. Anlage nach Anspruch 1, dadurch gekennzeichnet, daß die Heißwasserzuführung mit der Zulaufleitung für Regeneriermittelflüssigkeit identisch ist.

3. Anlage nach einem der vorhergehenden Ansprüche, dadurch gekennzeichnet, daß mehrere übereinander stapelbare Ionenaustauscherbehälter (4a, 4b) vorgesehen sind.

4. Anlage nach einem der vorhergehenden Ansprüche, dadurch gekennzeichnet, daß in der Regenerierstation (1; 120) anstelle einer Ablaufleitung ein unterhalb des zu regenerierenden Ionenaustauscherbehälters (4a; 101) angeordnetes Sammelgefäß (2; 121) für verbrauchtes Regeneriermittel vorgesehen ist.

5. Anlage nach einem der vorhergehenden Ansprüche, dadurch gekennzeichnet, daß über den obersten Ionenaustauscherbehälter (4b; 101) in der Wasseraufbereitungsanlage ein Einlaufgefäß (8) angeordnet ist, welches vorzugsweise mit einem Deckel (7) abdeckbar ist.

6. Anlage nach einem der vorhergehenden Ansprüche, dadurch gekennzeichnet, daß die Regenerierstation (1; 120) eine handelsübliche Haushaltskaffeemaschine enthält, deren Kaffeefilterhalter durch einen zu regenerierenden Ionenaustauscherbehälter (4) ersetzt ist.

7. Anlage nach einem der vorhergehenden Ansprüche, dadurch gekennzeichnet, daß die äußere Form des Behälters (101) der inneren Form eines Standard-Kaffeefiltertütenhalters (102) entspricht, und daß der mit Ionenaustauscherharz (104) befüllte Behälter (101) anstelle einer Kaffeefiltertüte in den Standard-Kaffeefiltertütenhalter (102) einer Kaffeemaschine oder in einen Standard-Kaffeefiltertütenhalter (102) für eine Kaffeefilterung von Hand eingesetzt werden kann.

8. Anlage nach Anspruch 7, dadurch gekennzeichnet, daß im Ionenaustauschbehälter (101) eine Behälterwand (103) und zwei Siebböden (105, 106) vorgesehen sind, von denen das Ionenaustauscherharz (104) gehalten werden kann, daß ein Verteilerboden (107) mit Öffnungen (108) vorgesehen ist, über den der Zulauf des zu behandelnden Wassers von oben erfolgen kann, daß ein äußeres Innenrohr (109) vorgesehen ist, in dem die behandelte Flüssigkeit nach oben geleitet werden kann bis zu einer Oberkante (110) eines inneren Innenrohres (111), welche eine Überlaufkante bildet, wobei die Flüssigkeit in diesem Innenrohr nach unten strömen kann, und daß ein Behälterauslaß (113) in einem Behälterboden (112), der den Ionenaustauscherbehälter verschließt, vorgesehen ist, über den die Flüssigkeit den Behälter wieder verlassen kann.

9. Anlage nach Anspruch 7, dadurch gekennzeichnet, daß der Ionenaustauscherbehälter (101) von oben verschlossen ist, daß ein Tauchrohr (115) vorgesehen ist, über das das zu behandelnde Wasser bzw. die Regeneriermittellösung in den Ionenaustauscherbehälter (101) hineinströmen kann, daß ein ebenfalls verschlossener Behälterboden (116) vorgesehen ist, oberhalb dessen die Flüssigkeit wieder nach oben umgeleitet werden kann, daß zwei Siebböden (105, 106) vorgesehen sind, zwischen denen Ionenaustauscherharz (104) gehalten ist, durch welches das Fluid hindurchströmen und sich oberhalb des oberen Siebbodens (106) bzw. unterhalb einer Ionenaustauscherbehälteroberwand (118) sammeln und den Ionenaustauscherbehälter (101) über eine in diesem Bereich mit Öffnungen (118) versehene Außenwand (103) wieder verlassen kann, woraufhin es zwischen dieser Außenwand des Ionenaustauscherbehälters und dem Standard-Kaffeefiltertütenhalter (102) schwerkraftbedingt nach unten zu dessen Auslauf (114) strömen kann.

10. Anlage nach Anspruch 9, dadurch gekennzeichnet, daß die Öffnungen (118) in der Außenwand unterhalb der Ionenaustauscherbehälteroberwand (117) so gestaltet sind, daß sie den Siebboden (106) ersetzen.

11. Anlage nach einem der vorhergehenden Ansprüche, dadurch gekennzeichnet, daß zusätzlich zum Ionenaustauscherharz (10; 104) noch Aktivkohle in den Ionenaustauscherbehälter (4; 4a, 4b; 101) eingefüllt ist.

12. Verfahren zum Betrieb einer Klein-Wasseraufbereitungsanlage nach einem der vorhergehenden Ansprüche, dadurch gekennzeichnet, daß beim Regenerieren des Ionenaustauscherharzes (10; 104) bei mindestens einem Regenerationsschritt heiße Flüssigkeit mit einer Temperatur zwischen 50°C und 110°C, vorzugsweise zwischen 80°C und 110°C, durch das Ionenaustauscherharz (10; 104) geleitet wird.

13. Verfahren nach Anspruch 12, dadurch gekennzeichnet, daß heiße Regeneriermittellösung durch das Ionenaustauscherharz (10; 104) geleitet wird.

14. Verfahren nach Anspruch 12 oder 13, dadurch gekennzeichnet, daß heißes Wasser in einem Spülschritt zum Auswaschen von Regeneriermittelresten durch das Ionenaustauscherharz (10; 104) geleitet wird.

15. Verfahren nach einem der Ansprüche 12 bis 14, dadurch gekennzeichnet, daß die heiße Regeneriermittellösung bzw. das heiße Nachspülwasser außerhalb der Regenerierstation, beispielsweise auf einem Herd in einem Teewasserkessel bereitet und anschließend von oben in den oder die Ionenaustauscherbehälter (4, 4a, 4b; 101) gegossen wird.

16. Verfahren nach einem der Ansprüche 12 bis 14 unter Verwendung einer Haushaltskaffeemaschine nach Anspruch 7, dadurch gekennzeichnet, daß Regeneriermittel abgemessen und in eine Kaffeekanne (2; 121) gegeben wird, die Kaffeekanne (2; 121) daran anschließend in einer vorgegebenen Volumenmenge oder bis zu einer vorgegebenen Markierung mit Leitungswasser gefüllt wird, wobei sich das Regeneriermittel unter Bildung einer Regeneriermittellösung zumindest weitgehend auflöst und diese Regeneriermittellösung in einen Vorratsbehälter (3; 122) der Kaffeemaschine eingefüllt wird und nach Betätigen eines Schalters (5; 123) der Kaffeemaschine erhitzt und in den oberen Zulauf des zu regenerierenden Ionenaustauscherbehälters (4; 101) transportiert wird, das verbrauchte Regeneriermittel den Ionenaustauscherbehälter an seinem unteren Ende wieder verläßt und in der Kaffeekanne aufgefangen wird, welche nach beendetem Durchlauf der Regeneriermittellösung durch das Ionenaustauschermaterial entleert, ausgespült und mit Leitungswasser befüllt wird, welches wiederum in den Vorratsbehälter (3; 122) der Kaffeemaschine eingefüllt wird und in einem zweiten Durchlauf als heißes Nachwaschwasser den Ionenaustauscherbehälter (4; 101) von Regeneriermittelresten befreit und weiter aufheizt bzw. die durch die Regeneration erreichte hohe Temperatur im Ionenaustauschermaterial über einen längeren Zeitraum aufrecht erhält.

17. Verfahren nach Anspruch 12, dadurch gekennzeichnet, daß der Ionenaustauscherbehälter (101) zur Herstellung von gereinigtem Wasser in einen Kaffeefiltertütenhalter (102) eingesetzt wird.

18. Verfahren nach Anspruch 12, dadurch gekennzeichnet, daß der Ionenaustauscherbehälter (101) zur Regeneration in einen Kaffeefiltertütenhalter (102) eingesetzt wird.

19. Verfahren nach Anspruch 12, dadurch gekennzeichnet, daß der Ionenaustauscherbehälter (101) zur Regeneration und thermischen Desinfektion in einen Kaffeefiltertütenhalter (102) eingesetzt wird.

20. Verfahren nach Anspruch 19, dadurch gekennzeichnet, daß die Regeneration und Desinfektion in einer Haushaltskaffeemaschine durchgeführt wird.

21. Verfahren nach Anspruch 19 oder 12 zum Betrieb einer Anlage nach Anspruch 11, dadurch gekennzeichnet, daß die Aktivkohle ebenfalls thermisch desinfiziert wird.

22. Verfahren nach Anspruch 21, dadurch gekennzeichnet, daß die Aktivkohle vor jeder Regeneration verworfen und nach der Regeneration durch frische Aktivkohle ersetzt wird.

## Claims

1. A small water treatment plant for the production of drinking and cooking water with at least one ion exchanger container filled with resin having a capacity between 100 ml and 1000 ml and with which, in each case, approximately 10 l to 100 l of treated water can be produced with one charge of regenerated resin, wherein the ion exchanger container has upper and lower water permeable sieve floors or has perforations provided in the upper and/or lower region of its side walls as well as a free water inlet and drain, wherein the water inlet to the ion exchanger material is substantially pressure free and configured in such a fashion that water flows through the ion exchanger container due only to gravitational forces,
characterized in that,
a regeneration station (1; 120) is provided having a conduit for inlet of regeneration agent fluid into the upper portion of the ion exchanger container (4, 4a, 4b; 101) and a conduit for draining exhausted regeneration agent out of the floor portion of the ion exchanger container (4, 4a, 4b; 101) and also having a hot water inlet to the ion exchanger container (4, 4a, 4a; 101) for hot water between 50°C and 110°C, in particular between 80°C and 110°C with the regeneration station (1; 120) containing a device for heating of the regeneration agent fluid up to 50°C to 110°C.

2. The unit according to claim 1, characterized in that the hot water inlet is the inlet conduit for the regeneration agent fluid.

3. The unit according to any one of the preceding claims, characterized by a plurality of ion exchanger containers (4a, 4b) which can be vertically stacked above another.

4. The unit according to any one of the preceding claims, characterized in that, instead of a drain conduit, a collection vessel (2; 121) for exhausted regeneration agent is provided in the regeneration station (1; 120) below the ion exchanger container (4a; 101) which is to be regenerated.

5. The unit according to any one of the preceding claims, characterized in that an inlet vessel (8), which can preferentially be covered by a lid (7), is disposed in the water processing unit above the uppermost ion exchanger container (4b; 101).

6. The unit according to any one of the preceding claims, characterized in that the regeneration station (1; 120) contains a commercially available household coffee machine, the coffee filter holder of which is replaced by an ion exchanger container (4) which is to be regenerated.

7. The unit according to any one of the preceding claims, characterized in that the outer shape of the container (101) corresponds to the inner shape of a standard coffee filter bag container (102) and the container (101) filled with ion exchanger resin (104) can be utilized in place of a coffee filter bag in the standard coffee filter bag holder (102) of a coffee machine or in a standard coffee filter bag holder (102) for manual coffee filtering.

8. The unit according to claim 7, characterized in that a container wall (103) and two sieve floors (105, 106) are provided for in the ion exchanger container (101) by means of which the ion exchanger resin (104) can be contained and a distributor floor (107) is provided with openings (108) through which the inlet of the water to be treated can be effected from above and that an outer inside tube (109) is provided for in which the treated fluid can be guided in an upward direction up to an upper edge (110) of an inner inside tube (111) forming an overflow edge, wherein the fluid can flow in this inside tube in a downward direction, and a container drain (113) is provided for in a container floor (112) closing the ion exchanger container through which the fluid can leave the container.

9. The unit according to claim 7, characterized in that the ion ion exchanger container (101) is closed at the top and a submerged tube (115) is provided for through which the water to be treated or the regeneration agent solution respectively can flow into the ion exchanger container (101) and a closed container floor (116) is provided for through which the fluid can once more be guided in an upward direction and two sieve floors (105, 106) are provided for between which the ion exchanger resin (104) is held and through which the fluid flows and collects above the upper sieve floor (106) or below an upper wall of an ion exchanger container (118) respectively to leave the ion exchanger container (101) via an outer wall (103) provided with openings (118) in this region, as result of which it can flow downwardly under the influence of gravitational force between this outer wall of the ion exchanger container and the standard coffee filter bag holder (102) towards its drain (114).

10. The unit according to claim 9, characterized in that the openings (118) in the outer wall are disposed below the upper wall of the ion exchanger holder (117) in such a fashion that they replace the sieve floor (106).

11. The unit according to any one of the preceding claims, characterized in that activated carbon is added into the ion exchanger container (4, 4a, 4b; 101) in addition to ion exchanger resin (10; 104).

12. Method for the operation of a small water treatment unit according to any one of the preceding claims, characterized in that, for regeneration of the ion exchanger resin (10; 104) in at least one regeneration step, hot fluid having a temperature between 50°C and 110°C, preferentially between 80°C and 110°C, is guided through the ion exchanger resin (10; 104).

13. Method according to claim 12, characterized in that hot regenerating agent solution is fed through the ion exchanger resin (10; 104).

14. Method according to claim 12 or 13, characterized in that hot water is fed through the ion exchanger resin (10; 104) in a rinsing step for washing out residual regeneration agent.

15. Method according to any one of the claims 12 through 14, characterized in that the hot regeneration agent solution or the hot rinsing water respectively is prepared outside of the regeneration station, e.g. on a stove in a tea kettle, and subsequently poured from above into the ion exchanger container or containers (4, 4a, 4b; 101).

16. Method according to any one of the claims 12 through 14 using a household coffee machine in accordance with claim 7, characterized in that regeneration agent is admeasured and dispensed into a coffee pot (2; 121) and the coffee pot (2; 121) is then subsequently filled with a predetermined volume amount of or up to a predetermined marking with tap water, wherein the regeneration agent is at least substantially dissolved with formation of a regeneration agent solution and this regeneration agent solution is filled into a supply container (3; 122) of the coffee machine and, after operation of the switch (5; 123) of the coffee machine, is heated and transported into the upper inlet of the ion exchanger container (4; 101) to be regenerated with the exhausted regeneration agent departing from the ion exchanger container at its lower end and being received in the coffee pot, which, following passage of the regeneration agent solution through the ion exchanger material, is emptied, rinsed and filled with tap water which is again filled into the supply container (3; 122) of the coffee machine to, in a second cycle in the form of hot rinsing water, remove residual regeneration agent from the ion exchanger container (4; 101) and additionally heat same or maintain, over a longer period of time, same at the high temperature in the ion exchanger material achieved through regeneration.

17. Method according to claim 12, characterized in that the ion exchanger container (101) is used in a coffee filter bag holder (102) for the production of purified water.

18. Method according to claim 12, characterized in that the ion exchanger container (101) is used for regeneration in a coffee filter bag holder (102).

19. Method according to claim 12, characterized in that the ion exchanger container (101) is used in a coffee filter bag holder (102) for regeneration and thermal disinfection.

20. Method according to claim 19, characterized in that the regeneration and disinfection is carried out in a household coffee machine.

21. Method according to claim 19 or 20 for operation of a unit according to claim 11, characterized in that the activated carbon is likewise thermally disinfected.

22. Method according to claim 21, characterized in that the activated carbon is disposed of prior to each regeneration and, after regeneration, replaced with fresh activated carbon.

## Revendications

1. Petite installation de traitement de l'eau pour la production d'eau potable et de cuisson comportant au moins un récipient d'échangeur d'ions rempli de résine qui présente une capacité comprise entre 100 ml et 1 000 ml et avec lequel il est possible de produire environ 10 l à 100 l d'eau constituant le produit avec un garnissage dc résine régénérée, le récipient d'échangeur d'ions comportant en haut et en bas des planchers perforés perméables à l'eau ou des perforations prévues dans le domaine supérieur et/ou inférieur de ses parois latérales ainsi qu'une entrée d'eau et une sortie d'eau libres, et l'entrée d'eau dans le récipient d'échangeur d'ions étant sensiblement sans pression et agencée de telle manière qu'un courant d'eau s'établit dans le récipient d'échangeur d'ions uniquement du fait de la force de pesanteur, caractérisée en ce qu'il est prévu une station de régénération (1 ; 120) avec une conduite d'entrée pour du liquide régénérant à la partie supérieure du récipient d'échangeur d'ions (4, 4a, 4b ; 101) et une conduite de sortie pour le régénérant usé à la partie inférieure du récipient d'échangeur d'ions (4, 4a, 4b ; 101) ainsi qu'un apport d'eau chaude au récipient d'échangeur d'ions (4, 4a, 4b ; 101) pour de l'eau chaude entre 50°C et 110°C, en particulier entre 80°C et 110°C, et en ce que la station de régénération (1 ; 120) contient un dispositif pour chauffer le liquide régénérant à une température de 50 à 110°C.

2. Installation selon la revendication 1, caractérisée en ce que l'apport d'eau chaude est identique à la conduite d'entrée pour le liquide régénérant.

3. Installation selon l'une des revendications précédentes, caractérisée en ce qu'il est prévu plusieurs récipients d'échangeur d'ions (4a, 4b) empilables les uns sur les autres.

4. Installation selon l'une des revendication précédentes, caractérisée en ce qu'il est prévu dans la station de régénération (1 ; 120) à la place d'une conduite de sortie un récipient collecteur (2 ; 121) pour le régénérant usé disposé sous le récipient d'échangeur d'ions (4a ; 101) à régénérer.

5. Installation selon l'une des revendications précédentes, caractérisée en ce qu'au-dessus du récipient d'échangeur d'ions supérieur (4b ; 101) dans l'installation de traitement de l'eau, il est prévu un récipient d'entrée (8) qui, de préférence, peut être fermé par un couvercle (7).

6. Installation selon l'une des revendications précédentes, caractérisée en ce que la station de régénération (1 ; 120) contient une machine à café domestique du commerce dont le porte-filtre à café est remplacé par un récipient d'échangeur d'ions (4) à régénérer.

7. Installation selon l'une des revendications précédentes, caractérisée en ce que la forme extérieure du récipient (101) correspond à la forme intérieure d'un porte-filtre à café standard (102) et en ce que le récipient (101) rempli de résine échangeuse d'ions (104) peut être utilisé à la place d'un filtre à café dans le poste-filtre à café standard (102) d'une machine à café ou dans un porte-filtre à café standard (102) pour un filtrage manuel du café.

8. Installation selon la revendication 7, caractérisée en ce qu'il est prévu dans le récipient d'échangeur d'ions (101) une paroi de récipient (103) et deux planchers perforés (105, 106) par lesquels la résine échangeuse d'ions (104) peut être maintenue, en ce qu'il est prévu un plancher distributeur (107) avec des ouvertures (108) par lequel l'entrée d'eau à traiter peut se faire par en haut, en ce qu'il est prévu un tube interne extérieur (109) dans lequel le liquide traité peut être conduit vers le haut jusqu'à un bord supérieur (110) d'un tube interne intérieur (111) qui forme un bord de trop-plein, le liquide pouvant s'écouler vers le bas dans ce tube interne, et en ce qu'il est prévu dans un plancher de récipient (112) qui ferme le récipient d'échangeur d'ions une sortie de récipient (113), par laquelle le liquide peut quitter le récipient.

9. Installation selon la revendication 7, caractérisée en ce que le récipient d'échangeur d'ions (101) est fermé par en haut, on ce qu'il est prévu un tube plongeant (115) par lequel l'eau à traiter ou la solution de régénérant peut pénétrer dans le récipient d'échangeur d'ions (101), en ce qu'il est prévu un plancher de récipient (116) également fermé au-dessus duquel le liquide peut être dévié vers le haut, en ce qu'il est prévu deux planchers perforés (105, 106) entre lesquels est maintenue la résine échangeuse d'ions (104) à travers laquelle le liquide peut s'écouler et peut se rassembler au-dessus du plancher perforé supérieur (106) ou au-dessous d'une paroi supérieure (118) du récipient d'échangeur d'ions et peut quitter le récipient d'échangeur d'ions (101) par une paroi extérieure (103) munie dans ce domaine d'ouvertures (118), après quoi il peut s'écouler vers le bas sous l'effet de la force de pesanteur entre cette paroi extérieure du récipient d'échangeur d'ions et le porte-filtre à café (102) jusqu'à sa sortie (114).

10. Installation selon la revendication 9, caractérisée en ce que les ouvertures (118) dans la paroi extérieure sous la paroi supérieure (117) du récipient d'échangeur d'ions sont telles qu'elles remplacent le plancher perforé (106).

11. Installation selon l'une des revendications précédentes, caractérisée en ce que du charbon actif est contenu dans le récipient d'échangeur d'ions (4 ; 4a, 4b ; 101) en plus de la résine échangeuse d'ions (10 ; 104).

12. Procédé pour exploiter une petite installation de traitement de l'eau selon l'une des revendications précédentes, caractérisé en ce que, lors de la régénération de la résine échangeuse d'ions (10 ; 104), au cours d'au moins une étape de régénération, du liquide chaud ayant une température comprise entre 50°C et 110°C, de préférence entre 80°C et 110°C, est amené à traverser la résine échangeuse d'ions (10 ; 104).

13. Procédé selon la revendication 12, caractérisé en ce qu'une solution chaude de régénérant est amenée à traverser la résine échangeuse d'ions (10 ; 104).

14. Procédé selon la revendication 12 ou 13, caractérisé en ce que de l'eau chaude est amenée à traverser la résine échangeuse d'ions (10 ; 104) dans une étape de lavage pour éliminer par lavage les restes de régénérant.

15. Procédé selon l'une des revendications 12 à 14, caractérisé en ce que la solution chaude de régénérant ou l'eau chaude de post-lavage est préparée à l'extérieur de la station de régénération, par exemple sur un foyer dans une théière, puis est versée par le haut dans le ou les récipients d'échangeur d'ions (4, 4a, 4b ; 101).

16. Procédé selon l'une des revendications 12 à 14, avec utilisation d'une machine à café domestique selon la revendication 7, caractérisé en ce que du régénérant est mesuré et introduit dans une cafetière (2 ; 121), la cafetière (2 ; 121) est ensuite remplie d'eau du robinet en une quantité volumique prédéterminée ou jusqu'à une marque prédéterminée, de sorte que le régénérant se dissout au moins pour la majeure partie en formant une solution de régénérant, et cette solution de régénérant est introduite dans un réservoir (3 ; 122) de la machine à café et, après actionnement d'un commutateur (5 ; 123) de la machine à café, chauffée et transportée dans l'entrée supérieure du récipient d'échangeur d'ions à régénérer (4 ; 101), le régénérant usé quitte le récipient d'échangeur d'ions au niveau de son extrémité inférieure et est recueilli dans la cafetière qui, après la fin du passage de la solution de régénérant dans le matériau échangeur d'ions, est vidée, rincée et remplie d'eau du robinet qui est de nouveau introduite dans le réservoir (3 ; 122) de la machine à café et, dans un deuxième passage sous forme d'eau chaude de post-lavage, débarrasse le récipient d'échangeur d'ions (4 ; 101) des restes de régénérant et le chauffe encore ou maintient pendant une durée relativement longue la haute température atteinte dans le matériau échangeur d'ions par la régénération.

17. Procédé selon la revendication 12, caractérisé en ce que le récipient d'échangeur d'ions (101) est utilisé pour la production d'eau purifiée dans un porte-filtre à café (102).

18. Procédé selon la revendication 12, caractérisé en ce que le récipient d'échangeur d'ions (101) est utilisé pour la régénération dans un porte-filtre à café (102).

19. Procédé selon la revendication 12, caractérisé en ce que le récipient d'échangeur d'ions (101) est utilisé pour la régénération et la désinfection thermique dans un porte-filtre à café (102).

20. Procédé selon la revendication 19, caractérisé en ce que la régénération et la désinfection sont réalisées dans une machine à café domestique.

21. Procédé selon la revendication 19 ou 12 pour l'exploitation d'une installation selon la revendication 11, caractérisé en ce que le charbon actif est également désinfecté thermiquement.

22. Procédé selon la revendication 21, caractérisé en ce que le charbon actif est jeté avant chaque régénération et remplacé par du charbon actif frais après la régénération.
